# EUROPÄISCHE PATENTANMELDUNG

(11) **EP 2 444 558 A1**
(43) Veröffentlichungstag der Anmeldung: **25.04.2012**
(21) Anmeldenummer: 11007854.0
(22) Anmeldetag: 28.09.2011
(51) Int. Cl.: E02F 9/26, G01G 19/10, E02F 3/34

(54) **Verfahren zum Ermitteln der Masse des in einem Werkzeug eines an einem Fahrzeug angeordneten Frontladers aufgenommenen Ladeguts**

(30) Priorität: 23.10.2010 DE 102010050796
(71) Anmelder: Robert Bosch GmbH, 70442 Stuttgart (DE)
(72) Erfinder: Sönke, Jessen, 71732 Tamm (DE)
(74) Vertreter: Thürer, Andreas

(57) **Zusammenfassung**

Die Erfindung bezieht sich auf ein Verfahren zum Ermitteln der Masse des in einem Werkzeug eines an einem Fahrzeug angeordneten Frontladers aufgenommenen Ladeguts, wobei das schwenkbar antreibbare Werkzeug durch eine Parallelführung in seiner jeweils eingenommenen Kippstellung haltbar an einem Ende einer Frontladerschwinge des Frontladers angeordnet ist und die Frontladerschwinge durch eine oder mehrere hydraulische Zylinder-Kolbeneinheiten um eine Schwenkachse an seinem anderen Ende schwenkbar antreibbar ist. Die Drücke in der Zylinder-Kolbeneinheit werden während einer Heben-Senken-Heben-Bewegung der Frontladerschwinge aus einer Ausgangsstellung in die Ausgangsstellung zurück gemessen und aus den gemessenen Drücken ein mittlerer Hydraulikdruck über den Bewegungsweg ermittelt. Ein Nettodruck wird durch Subtrahieren des Schwingeneigengewichtsdrucks in der Zylinder-Kolbeneinheit von dem ermittelten mittleren Hydraulikdruck ermittelt. Eine Nettomasse wird durch Multiplikation des Nettodrucks mit einem in kg/bar angegebenen Abgleichfaktor ermittelt und die Masse des Ladeguts wird durch Subtraktion der Masse des leer gewogenen Werkzeugs ermittelt.

## Beschreibung

Die Erfindung bezieht sich auf ein Verfahren zum Ermitteln der Masse des in einem Werkzeug eines an einem Fahrzeug angeordneten Frontladers aufgenommenen Ladeguts, wobei das schwenkbar antreibbare Werkzeug durch eine Parallelführung in seiner jeweils eingenommenen Kippstellung haltbar an einem Ende einer Frontladerschwinge des Frontladers angeordnet ist und die Frontladerschwinge durch eine oder mehrere hydraulische Zylinder-Kolbeneinheiten um eine Schwenkachse an seinem anderen Ende schwenkbar antreibbar ist.

Aufgabe der Erfindung ist es ein Verfahren der eingangs genannten Art zu schaffen, das auf einfache Weise ein Ermitteln der Masse des Ladeguts mit hoher Genauigkeit in jeder Hubposition des Werkzeugs ermöglicht.

Diese Aufgabe wird erfindungsgemäß dadurch gelöst, dass die Drücke in der Zylinder-Kolbeneinheit während einer Messbewegung der Frontladerschwinge aus einer Ausgangsstellung in die Ausgangsstellung zurück gemessen und aus den gemessenen Drücken ein mittlerer Hydraulikdruck über den Bewegungsweg ermittelt wird, dass ein Nettodruck durch Subtrahieren des Schwingeneigengewichtsdrucks in der Zylinder-Kolbeneinheit von dem ermittelten mittleren Hydraulikdruck ermittelt wird, dass eine Nettomasse durch Multiplikation des Nettodrucks mit einem in kg/bar angegebenen Abgleichfaktor ermittelt wird und dass die Masse des Ladeguts durch Subtraktion der Masse des leer gewogenen Werkzeugs ermittelt wird.

Durch den Messzyklus der Messbewegung und dessen Wechsel der Bewegungsrichtung ist die Druckmessung hysteresefrei und unabhängig von mechanischen und hydraulischen Reibungen.

Die Bewegung erfolgt dabei mit sehr geringen, exakt reproduzierbaren Ölströmen.

Durch die geringe Strömungsgeschwindigkeit spielt die Ölviskosität und damit auch die Öltemperatur eine unbedeutende Rolle, so dass das Verfahren unabhängig von der Öltemperatur ist.

Damit erfolgt das Ermitteln der Masse des Ladeguts mit einer hohen Genauigkeit.

Um die Bewegungen und damit die Messdauer kurz zu halten, wird während des gesamten Bewegungsablaufs der Druck bestimmt. Dabei eliminieren sich die beiden Druckerhöhungen durch die Richtungsumkehrungen während der Messbewegung.

Die Messzeit sollte größer als zwei Sekunden, vorzugsweise in der Größenordnung von drei Sekunden betragen, was zu einer guten Genauigkeit der Messung führt.

Durch die Länge der Bewertungsdauer des Verfahrens kann die Ermittlung der Masse des Ladeguts nicht nur bei stehendem Fahrzeug, insbesondere bei stehendem Traktor, sondern mit nur unbedeutend geringerer Genauigkeit auch bei fahrendem Fahrzeug, insbesondere fahrendem Traktor, ermittelt werden.

Es versteht sich, dass unter Frontlader die Hubgerüste verschiedenster mobiler Arbeitsmaschinen zum Materialumschlag wie z.B. Radlader, Telelader, Gabelstapler, etc. betrachtet werden. Vorzugsweise sind die Frontlader an Traktoren angeordnet.

Ein Ermitteln der Masse des in dem Werkzeug aufgenommenen Ladeguts kann in jeder Hubhöhe des Frontladers erfolgen.

Weiterhin wird eine Erhöhung der Genauigkeit der Ermittlung der Masse des Ladeguts erreicht, wenn der Abgleichfaktor durch Fahrzeugzustände wie z.B. der Stellung der Frontladerschwinge und/oder der Fahrzeugneigung gegenüber der Horizontalen veränderbar ist.

Vorzugsweise wird die Kippstellung des Werkzeugs durch die Parallelführung während der Messbewegung konstant gehalten.

Durch die mechanische Parallelführung des Werkzeugs werden dabei die unterschiedlichen Schwerpunktlagen des Ladeguts kompensiert.

Ist sichergestellt, dass die mechanische Parallelführung eine ausreichende Güte besitzt, kann in einer beliebigen Werkzeugkippstellung die Masse des Ladeguts ermittelt werden.

Wird die Messbewegung automatisch angesteuert, also nicht manuell angesteuert, werden Ungenauigkeiten der Dauer des Verfahrens und der Größe des Ölstromes vermieden. Darüber hinaus ist dadurch das Verfahren auch bedienerfreundlich.

Wenn die Gesamtzeit in die eine Bewegungsrichtung der Gesamtzeit in die andere Bewegungsrichtung entspricht, insbesondere, wenn die Messbewegung eine Bewegung des Frontladers in seine beiden Bewegungsrichtungen Heben und Senken umfasst, wobei die Messbewegung Bewegungsumkehrungen von Heben zu Senken und von Senken zu Heben aufweisen können und wobei die Druckmesszeiten der zwei Heben-Bewegungen gleichlang sind und in Summe der Druckmesszeit der einen Senkenbewegung entsprechen oder die Druckmesszeiten der zwei Senken-Bewegungen gleichlang sind und in Summe der Druckmesszeit der einen Heben-Bewegung entsprechen, lässt sich der ideale Druck über die gesamte Messdauer gleich bewerten.

Zu einer hohen Genauigkeit der Messung führt es, wenn der Messstart der Druckmesszeit der Messbewegung eine konstante Wartezeit nach Beginn der Messbewegung erfolgt und die Druckmesszeit um eine der konstanten Wartezeit entsprechende Beendigungszeit vor dem Ende der Messbewegung beendet wird, so dass die erste Beschleunigung und auch die letzte Verzögerung nicht betrachtet werden und der Messstart erst nach Einsetzen einer kontinuierlichen Bewegung erfolgt.

Eine Erhöhung der Messgenauigkeit kann dadurch erreicht werden, dass das Schwingeneigengewicht durch einen Korrekturfaktor korrigiert wird, der aus der Differenz der Neigung der Frontladerschwinge zur Neigung des Fahrzeugs gegenüber dem Schwerefeld der Erde gebildet wird.

Dabei kann die Neigung des Fahrzeugs gegenüber dem Schwerefeld der Erde mittels eines am feststehenden Teil des Fahrzeugs angeordneten Neigungssensors ermittelt werden.

Die Neigung der Frontladerschwinge gegenüber dem Schwerefeld der Erde kann durch einen an der Frontladerschwinge angeordneten weiteren Neigungssensor ermittelt werden.

Andere Möglichkeiten bestehen darin, dass die Neigung der Frontladerschwinge durch eine Messung des Winkels zwischen dem Fahrzeug und der Frontladerschwinge oder durch Messung der Länge einer der hydraulischen Zylinder-Kolbeneinheiten ermittelt wird.

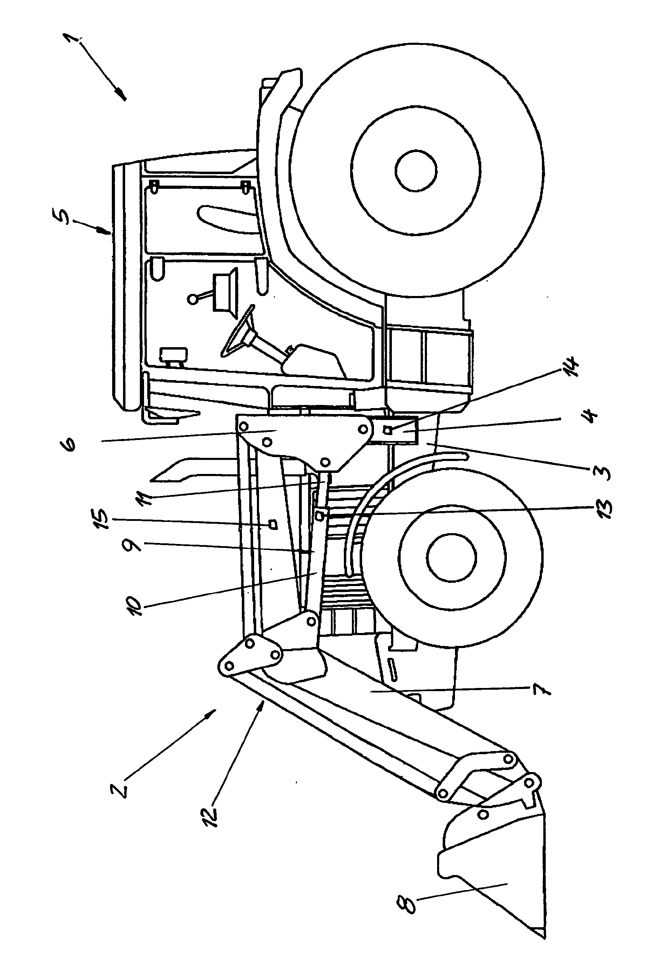

Ein Ausführungsbeispiel der Erfindung ist in der Zeichnung dargestellt und wird im folgenden näher beschrieben. Die einzige Figur der Zeichnung zeigt eine Seitenansicht eines Traktors mit einem Frontlader.

Der in der Zeichnung dargestellte Traktor 1 ist mit einem Frontlader 2 bestückt.

Der Traktor 1 weist einen Fahrzeugrahmen 3 auf, an dem eine Konsole 4 zum Anbauen des Frontladers 2 befestigt ist. Ferner besitzt der Traktor 1 eine Fahrzeugkabine 5.

Der Frontlader 2 weist einen Halter 6 auf, mit dem der Frontlader 2 an der Konsole 4 befestigt ist.

Der Frontlader 2 weist weiterhin eine Frontladerschwinge 7 auf, die mit einem Werkzeug 8 in Form einer Ladeschaufel bestückt ist.

An dem Werkzeug 8 greift in bekannter Weise eine Parallelführung 12 an.

Durch eine nicht dargestellte Vorrichtung ist das Werkzeug in unterschiedliche Kippstellungen schwenkbar antreibbar.

Zwischen der Frontladerschwinge 7 und dem Halter 6 erstreckt sich beidseitig eine hydraulische Zylinder-Kolbeneinheit 9 zum Heben und Senken der Frontladerschwinge 7 mittels eines nicht dargestellten Hydrauliksystems.

Dabei ist in einem Zylinder 10 der Zylinder-Kolbeneinheit 9 ein verschiebbarer Kolben angeordnet, der einseitig eine Kolbenstange 11 aufweist, die dicht aus dem Zylinder 10 herausgeführt und mit ihrem freien Ende an dem Halter 6 angelenkt ist.

Das der Kolbenstange 11 entgegengesetzte Ende des Zylinders 10 ist im mittleren Bereich der Frontladerschwinge 7 angelenkt.

Durch einen Drucksensor 13 ist der jeweilige Druck in einer der Zylinder-Kolbeneinheiten 9 erfassbar.

Es ist auch möglich, dass auf beiden Seiten des Kolbens der Zylinder-Kolbeneinheit der Druck durch jeweils einen Drucksensor gemessen wird, da auch der Rücklaufdruck eine nennenswerte Höhe erreichen kann.

Mittels eines ersten Neigungssensors 14, der an der Konsole 4 angeordnet ist, wird die jeweilige Neigung des Traktors 1 gegenüber dem Schwerefeld der Erde ermittelt.

Weiterhin ist an der Frontladerschwinge 7 ein zweiter Neigungssensor 15 zur Ermittlung der Neigung der Frontladerschwinge 7 gegenüber dem Schwerefeld der Erde angeordnet.

Die ermittelten Werte von Drucksensor 13, erstem Neigungssensor 14 und zweitem Neigungssensor 15 werden einer nicht dargestellten Elektronikeinheit zugeleitet, durch die das genannte Verfahren gesteuert wird.

Der Ladevorgang und der Messablauf zum Ermitteln der Masse des in dem Werkzeug 8 aufgenommenen Ladeguts erfolgt folgendermaßen.

Der Fahrer fährt mit dem Traktor 1 typischerweise vorwärts in einen Ladeguthaufen ein und lädt sein Ladegut in das Werkzeug 8. Dabei kippt er zur Ladegutaufnahme nach dem Einstechen in den Ladeguthaufen das Werkzeug 8 nach hinten bis an einen Anschlag. Gleichzeitig wird die Frontladerschwinge 7 leicht angehoben, um eine möglichst gute Füllung des Werkzeugs 8 zu gewährleisten.

Der Fahrer fährt dann mit niedrigem Werkzeug 8 rückwärts wieder aus dem Ladeguthaufen.

Jetzt kann der Vorgang zum Ermitteln der Masse des in dem Werkzeug 8 aufgenommenen Ladeguts starten. Der Fahrer kann dabei fahren oder auch stehen, wenn er eine höhere Genauigkeit wünscht.

Wenn der Messvorgang gestartet ist, führt der Frontlader 2 automatisch eine Bewegung Heben-Senken-Heben um einige Zentimeter durch.

Die Messdauer ist etwa 3 Sekunden. Danach kann der Fahrer ganz normal weiterarbeiten. Mit dem angekippten Werkzeug 8 und der mechanischen Parallelführung wird das Ladegut bis zu einer Abkipphöhe angehoben.

Bei dem Zyklus des Messvorgangs erfolgt die Bewegung der Frontladerschwinge 7 mit sehr geringen, exakt reproduzierbaren Ölströmen. Durch die geringe Strömungsgeschwindigkeit spielt die ÖI-Viskosität eine unbedeutende Rolle, d.h. das Verfahren ist prinzipiell unabhängig von der Öltemperatur.

Die Bewegung der Frontladerschwinge 7 erfolgt wegen der Ungenauigkeiten der Dauer, der Größe des Ölstromes und wegen der Bedienerunfreundlichkeit automatisch, also explizit nicht manuell.

Bei dem Messvorgang werden die Drücke in der Zylinder-Kolbeneinheit 9 während einer Heben-Senken-Heben-Bewegung der Frontladerschwinge 7 aus der Ausgangsstellung und in die Ausgangsstellung zurück gemessen und aus den gemessenen Drücken ein mittlerer Hydraulikdruck über den Bewegungsweg ermittelt. Um die Bewegungen und damit die Messdauer kurz zu halten, wird während des gesamten Bewegungsablaufs der Druck bestimmt. Die beiden Druckerhöhungen durch die Richtungsumkehrungen Heben-Senken und Senken-Heben eliminieren sich dabei. Die erste Beschleunigung wird nicht betrachtet, da auch die letzte Verzögerung nicht betrachtet wird. Der Messstart ist erst nach Einsetzen einer kontinuierlichen Bewegung. Dies wird über eine konstante Wartezeit bis zum Messstart realisiert.

Es wird nun ein Nettodruck durch Subtrahieren des Schwingeneigengewichtsdrucks in der Zylinder-Kolbeneinheit 9 von dem ermittelten mittleren Hydraulikdruck ermittelt, dann eine Nettomasse durch Multiplikation des Nettodrucks mit einem in kg/bar angegebenen Abgleichfaktor und dann die Masse des Ladeguts durch Subtraktion der Masse des leer gewogenen Werkzeugs ermittelt.

## Patentansprüche

1. Verfahren zum Ermitteln der Masse des in einem Werkzeug eines an einem Fahrzeug angeordneten Frontladers aufgenommenen Ladeguts, wobei das schwenkbar antreibbare Werkzeug durch eine Parallelführung in seiner jeweils eingenommenen Kippstellung haltbar an einem Ende einer Frontladerschwinge angeordnet ist und die Frontladerschwinge des Frontladers durch eine oder mehrere hydraulische Zylinder-Kolbeneinheiten um eine Schwenkachse an seinem anderen Ende schwenkbar antreibbar ist,
**dadurch gekennzeichnet, dass**
die Drücke in der Zylinder-Kolbeneinheit (9) während einer Messbewegung der Frontladerschwinge (7) aus einer Ausgangsstellung in die Ausgangsstellung zurück gemessen werden und aus den gemessenen Drücken ein mittlerer Hydraulikdruck über den Bewegungsweg ermittelt wird,
dass ein Nettodruck durch Subtrahieren des Schwingeneigengewichtsdrucks in der Zylinder-Kolbeneinheit (9) von dem ermittelten mittleren Hydraulikdruck ermittelt wird, dass eine Nettomasse durch Multiplikation des Nettodrucks mit einem in kg/bar angegebenen Abgleichfaktor ermittelt wird und
dass die Masse des Ladeguts durch Subtraktion der Masse des leer gewogenen Werkzeugs (8) ermittelt wird.

2. Verfahren nach Anspruch 1, **dadurch gekennzeichnet, dass** die Kippstellung des Werkzeugs (8) durch die Parallelführung während der Messbewegung konstant gehalten wird.

3. Verfahren nach einem der vorhergehenden Ansprüche, **dadurch gekennzeichnet, dass** die Messbewegung automatisch angesteuert wird.

4. Verfahren nach einem der vorhergehenden Ansprüche, **dadurch gekennzeichnet, dass** die Messbewegung eine Bewegung des Frontladers in seine beiden Bewegungsrichtungen Heben und Senken umfasst.

5. Verfahren nach Anspruch 4, **dadurch gekennzeichnet, dass** die Messbewegung Bewegungsumkehrungen von Heben zu Senken und von Senken zu Heben oder von Senken zu heben und von Heben zu Senken aufweist.

6. Verfahren nach einem der Ansprüche 4 und 5, **dadurch gekennzeichnet, dass** die Druckmesszeiten der zwei Heben-Bewegungen gleichlang sind und in Summe der Druckmesszeit der einen Senkenbewegung entsprechen oder die Druckmesszeiten der zwei Senken-Bewegungen gleichlang sind und in Summe der Druckmesszeit der einen Heben-Bewegung entsprechen.

7. Verfahren nach einem der vorhergehenden Ansprüche, **dadurch gekennzeichnet, dass** der Messstart der Druckmesszeit der Messbewegung eine konstante Wartezeit nach Beginn der Messbewegung erfolgt und die Druckmesszeit um eine der konstanten Wartezeit entsprechende Beendigungszeit vor dem Ende der Messbewegung beendet wird.

8. Verfahren nach einem der vorhergehenden Ansprüche, **dadurch gekennzeichnet, dass** das Schwingeneigengewicht durch einen Korrekturfaktor korrigiert wird, der aus der Differenz der Neigung der Frontladerschwinge (7) zur Neigung des Fahrzeugs gegenüber dem Schwerefeld der Erde gebildet wird.

9. Verfahren nach Anspruch 6, **dadurch gekennzeichnet, dass** die Neigung des Fahrzeugs gegenüber dem Schwerefeld der Erde mittels eines am feststehenden Teil des Fahrzeugs angeordneten Neigungssensors (14) ermittelt wird.

10. Verfahren nach Anspruch 6, **dadurch gekennzeichnet, dass** die Neigung der Frontladerschwinge gegenüber dem Schwerefeld der Erde durch einen an der Frontladerschwinge (7) angeordneten weiteren Neigungssensor (15) ermittelt wird.

11. Verfahren nach Anspruch 6, **dadurch gekennzeichnet, dass** die Neigung der Frontladerschwinge durch eine Messung des Winkels zwischen dem Fahrzeug und der Frontladerschwinge ermittelt wird.

12. Verfahren nach Anspruch 6, **dadurch gekennzeichnet, dass** die Neigung der Frontladerschwinge durch Messung der Länge einer der hydraulischen Zylinder-Kolbeneinheiten ermittelt wird.
